# EUROPÄISCHE PATENTANMELDUNG

(11) **EP 1 396 720 A2**
(43) Veröffentlichungstag der Anmeldung: **10.03.2004**
(21) Anmeldenummer: 03020090.1
(22) Anmeldetag: 04.09.2003
(51) Int. Cl.: G01N 29/24, G01N 27/90, B06B 1/04

(54) **Vorrichtung und Verfahren zur Detektion von Materialdiskontinuitäten in einem Prüfkörper durch Verwendung von elektromagnetischen Ultraschallwandlern**

(30) Priorität: 09.09.2002 DE 10241831
(71) Anmelder: Fraunhofer-Gesellschaft zur Förderung der angewandten Forschung e.V., 80686 München (DE)
(72) Erfinder: Nichiforenco, Jorj, Dipl.-Ing., 66125 Saarbrücken (DE); Boulavinov, Andrei, Dipl.-Ing., 66125 Saarbrücken (DE); Kröning, Michael, Prof.Dr., 66123 Saarbrücken (DE); Rockstroh, Bernd, Dipl.-Ing., 66740 Saarlouis (DE)
(74) Vertreter: Rösler, Uwe, Dipl.-Phys.

(57) **Zusammenfassung**

Die Erfindung betrifft eine Vorrichtung bzw. ein Verfahren zur Detektion von Materialdiskontinuitäten in einem Prüfkörper, insbesondere einer Rohrleitung, mit zumindest einem elektromagnetischen Ultraschallsender, der wenigstens eine Spule und wenigstens einen Permanentmagneten vorsieht und zur Anregung von Ultraschallwellen im Prüfkörper ausgebildet ist, wenigstens einem Ultraschallempfänger, der wenigstens eine Spule und wenigstens einen Permanentmagneten vorsieht und der zur Detektion von innerhalb des Prüfkörpers reflektierten Ultraschallwellen ausgebildet ist sowie einer Magnetisierungseinheit, durch die im Prüfkörper ein magnetisches Feld erzeugbar ist.

Die erfindungsgemäße Vorrichtung bzw. das Verfahren zeichnet sich dadurch aus, dass der wenigstens eine Permanentmagnet des Ultraschallsenders sowie - empfängers die Magnetisierungseinheit darstellt.

## Beschreibung

### Technisches Gebiet

Die Erfindung bezieht sich auf eine Vorrichtung, eine Messanordnung sowie ein Verfahren zur Detektion von Materialdiskontinuitäten in einem Prüfkörper, insbesondere einer Rohrleitung. Die Vorrichtung bzw. die Messanordnung weist zumindest einen elektromagnetischen Ultraschallsender auf, der wenigstens eine Spule und wenigstens einen Permanentmagneten vorsieht und zur Anregung von Ultraschallwellen im Prüfkörper dient. Ferner sind wenigstens ein Ultraschallempfänger, der wenigstens eine Spule und wenigstens einen Permanentmagneten aufweist und zur Detektion von innerhalb des Prüfkörpers reflektierten Ultraschallwellen dient, sowie einer Magnetisierungseinheit vorgesehen, durch die im Prüfkörper ein statisches magetisches Feld erzeugbar ist.

### Stand der Technik

Die zerstörungsfreie Werkstoffprüfung ist besonders bei der Überprüfung von Bauteilen aus kostbaren Materialien aber auch bei Werkstücken, die über einen komplizierten Aufbau verfügen oder bereits als Komponenten in ein komplexes Systeme integriert sind, nicht mehr wegzudenken.

Eine Möglichkeit der zerstörungsfreien Überprüfung von Werkstücken in Bezug auf Materialfehler stellt die Untersuchung mit Ultraschallwellen dar. Hierbei werden Ultraschallwellen in ein Material eingekoppelt, die Reflexionssignale detektiert und durch die Auswertung der detektierten Reflexionssignale Fehler in den Werkstücken ermittelt. Es gibt grundsätzlich zwei Möglichkeiten, die Ultraschalltechnik für eine zerstörungsfreie Werkstücküberprüfung zu verwenden.

Zum einen werden piezoelektrische Ultraschallwandler eingesetzt, die Ultraschallwellenl erzeugen, die in das zu prüfende Werkstück häufig unter Verwendung eines Einkoppelmediums, wie z.B. Wasser, eingekoppelt werden. Beispielsweise werden Gas-Pipelines, die aus Stahlrohrleitungen bestehen, mittels Ultraschalltechnik auf rißartige Fehler an der Rohraußenseite überprüft. Die Ultraschalleinkopplung erfolgt jedoch hierbei mittels trockener Ankopplung an der Rohrinnenseite, beispielsweise über Luftschall oder Ultraschallanregung mittels Lasertechnik.

Grundsätzlich können in einem isotropen Festkörper, bspw. in Gestalt der Rohrwand einer Gas-Pipeline, mit einem piezoelektrischen Ultraschallwandler Druck-, Schervertikal- und Rayleigh-Wellen angeregt werden. Insbesondere Longitudinal-Wellen sowie vertikal polarisierte Transversal-Wellen (SV-Wellen) werden auf diese Weise seit langem für Ultraschallprüfungen verwendet.

Zum anderen werden elektromagnetische Ultraschallwandler bei der zerstörungsfreien Werkstoffprüfung eingesetzt, die durch eine berührungslose Energieübertragung die Bildung von Ultraschallwellen innerhalb des Prüfkörpers ermöglichen. Auch die Detektion der reflektierten Ultraschallsignale, erfolgt hierbei mit Hilfe einer berührungslosen Energieübertragung.

Im Gegensatz zu piezoelektrischen Ultraschallwandlern sind elektromagnetische Wandler weniger populär und bisher nur selten für die zerstörungsfreie Prüfung von Werkstücken eingesetzt worden. Dies ist vor allem darauf zurückzuführen, dass für eine erfolgreiche Werkstück- bzw. Materialuntersuchung die Erzeugung und Materialeinkopplung von horizontal polarisierten Transversal-Wellen (SH-Wellen) erforderlich ist. Derartige Ultraschallwellen sind jedoch bis vor kurzem lediglich mittels konventionellen Prüfköpfen, also piezoelektrischen Ultraschallwanldern, unter Verwendung sehr zähflüssiger Koppelmittel erzeugbar gewesen. Derartige zähflüssige Koppelmittel erlauben jedoch keine flexiblen Prüfkopfbewegungen, die für die meisten Anwendungen zur Wekstücküberprüfung erforderlich sind.

Mittlerweile sind für die Praxis aber auch eine Reihe von geeigneten elektromagnetischen Ultraschallwandlern (EMUS) entwickelt worden, die sehr wohl in der Lage sind, SH-Wellen zu erzeugen und ebenfalls zu empfangen. Derartige elektromagnetische Ultraschallwandler benötigen keine mechanische Verbindung, um akustische Wellen innerhalb metallischer Prüfkörper hervirzurufen. Vielmehr erzeugen EMUS-Wandler Ultraschallwellen in elektrisch leitendem Material aufgrund der Lorenz-Kraft und/oder des magnetostriktiven Effektes bzw. durch eine Kombination dieser beiden Phänomene. Beide Phänomene wirken auf das Atomgitter des Bauteils derart ein, so dass die akustische Welle direkt innerhalb des Bauteils anstatt im Wandler erzeugt wird.

Ein elektromagnetischer Ultraschallprüfkopf verfügt in der Regel sowohl über eine Spule, die Wirbelströme in dem zu prüfenden Werkstoff induziert, als auch über Permanentmagnete, die ein statisches Magnetfeld im Prüfkörper erzeugen. Problematisch beim Einsatz elektromagnetischer Ultraschallwandler ist allerdings, dass bei der dynamischen Prüfung ferromagnetischer Materialien, alo bei Verschwenken des Ultrschallprüfkopfes gegen über dem Prüfkörper, ein erhöhter Signalrauschuntergrund vorhanden ist, d.h. das Signal-/Rauschverhältnis ist relativ gering. Das ist darauf zurückzuführen, dass bei der Bewegung der elektromagnetischen Ultraschallwandler über ferromagnetische Materialien das sogenannte Barkhausen-Rauschen auftritt, dessen Rauschpegelhöhe je nach Abtastgeschwindigkeit typischerweise bis zu 25 dB betragen kann. Das Barkhausen-Rauschen ist letztendlich auf Bewegungen im Atomgitter des zu prüfenden Materials aufgrund der stattfindenden Ummagnetisierungen zurückzuführen.

Die DE 195 43 481 A1 beschreibt eine Vorrichtung zur Prüfung von ferromagnetischen Materialien, bei der während einer Bewegung eines elektromagnetischen Ultraschallwandlers über einen aus ferromagnetischen Material bestehenden Prüfkörper das Barkhausen-Rauschen derart unterdrückt wird, dass ein ausreichender gewünschter Signal-Rausch-Abstand erzielt wird. Dies wird dadurch erreicht, indem der elektromagnetische Ultraschallwandler mittig zwischen den Polbereichen zweier Permanentmagnete angeordnet ist. Durch diese Anordnung wird eine horizontale Vormagnetisierung des zu überprüfenden Prüfkörpers erreicht. Da die Materialwandung des Prüfkörpers durch den Einsatz der Permanentmagnete bis in die Nähe der magnetischen Sättigung magnetisiert wird, erfolgt durch die Bewegung des Ultraschallwandlers keine derartig starke Änderung des Magnetfeldes, wodurch die magnetischen Momente innerhalb der einzelnen Domänen innerhalb der Materialwandung nicht ummagnetisiert bzw. umgeklappt werden können. Auf diese Weise kann die Induktion eines das Barkhausen-Rauschen verursachenden Stromes nahezu vollständig vermieden.

Problematisch bei dem bekannten beschriebenen Verfahren ist jedoch, dass lediglich ein kleiner Bereich des Prüfkörpers, der sich zwischen den Polbereichen der Permanentmagnete befindet, von der elektromagnetischen Ultraschallanordnung untersucht werden kann. Ferner bildet sich zwischen den Permanentmagneten und dem elektromagnetischen Ultraschallwandler ein tangential zur Rohroberfläche orientiertes Magnetfeld aus, wodurch das im Prüfkörper vorherrschende Magnetfeld geschwächt wird. Zudem verursacht das tangential zur Rohroberfläche orientierte Magnetfeld Ultraschallwellen in den Permanentmagneten, die zu einem zusätzlichen Rauschanteil führen.

### Darstellung der Erfindung

Ausgehend von dem bekannten Stand der Technik liegt der Erfindung die Aufgabe zugrunde, ein Verfahren bzw. eine Vorrichtung zur Detektion von Materialdiskontinuitäten in einem Prüfkörper anzugeben, mit dem bzw. mit der der Prüfkörper, vorzugsweise in Form eines Rohrs, vorzugsweise ganzheitlich aber zumindest in großen Teilbereichen des Prüfkörpers mit einer einmaligen Messung auf Materialfehler überprüft werden kann. Insbesondere soll trotz eines vergrößerten Meßbereiches eine sichere Detektion von Materialdiskontinuitäten im Prüfkörper gewährleistet und gleichzeitig der apparative Aufwand der Prüfvorrichtung weitestgehend minimiert werden.

Die Lösung der der Erfindung zugrundeliegenden Aufgabe ist im Anspruch 1 angegeben. Ferner ist im Anspruch 14 eine Messanordnung unter Verwendung der erfindungsgemäßen Vorrichtung sowie im Anspruch 15 ein Verfahren zur Detektion von Materialdiskontinuitäten in einem Prüfkörper angegeben. Vorteilhafte Weiterbildungen des Erfindungsgedankens sind Gegenstand der Unteransprüche sowie aus dem nachfolgenden Beschreibungstext unter Bezugnahme auf die Ausführungsbeispiele zu entnehmen.

Erfindungsgemäß ist eine Vorrichtung zur Detektion von Materialdiskontinuitäten in einem Prüfkörper, vorzugsweise in Form einer Rohrleitung, mit zumindest einem elektromagnetischen Ultraschallsender, der wenigstens eine Spule und wenigstens einen Permanentmagneten vorsieht und zur Anregung von Ultraschallwellen im Prüfkörper ausgebildet ist, wenigstens einem Ultraschallempfänger, der wenigstens eine Spule und wenigstens einen Permanentmagneten vorsieht und der zur Detektion von innerhalb des Prüfkörpers reflektierten Ultraschallwellen ausgebildet ist sowie einer Magnetisierungseinheit, durch die im Prüfkörper ein statisches magnetisches Feld erzeugbar ist, dadurch ausgezeichnet, dass der wenigstens eine Permanentmagnet des Ultraschallsenders sowie -empfängers die Magnetisierungseinheit darstellt.

Durch die erfindungsgemäße Ausbildung der Vorrichtung beschränkt sich der Messbereich nicht auf einen engbegrenzten Raumbereich des Prüfkörpers, vielmehr steht dem Ultraschallsender sowohl in axialer Richtung als auch in Umfangsrichtung des als Rohr ausgebildeten Prüfkörpers ein großer Meßbereich zur Verfügung, aus dem die Ultraschallempfänger mögliche an Materialdiskontinuitäten auftretende Reflexionsereignisse erfassen können. Insbesondere ermöglicht die erfindungsgemäße Vorrichtung eine ausschließliche Magnetfelderzeugung innerhalb des zu prüfenden Materials des Prüfkörpers ohne störende tangentiale Magnetfeldanteile. Aufgrund der verlustfreien Einkopplung des statischen Magnetfeldes in den Prüfkörper, d.h. ohne auftretende Verlustmechanismen bspw. durch tangentiale Magnetfelder, ist es möglich, eine weitaus größere Magnetfeldstärke zu generieren als im Vergleich zum Stand der Technik, wodurch letztlich die Messreichweite, d.h. der maximale erfassbare Abstand zwischen der Messanordnung, bestehend aus Ultraschallsender und -empfänger, und einer Materialdiskontinuität innerhalb des Prüfkörpers vergrößert werden kann, bspw. auf bis zu 10 Meter.

Vorzugsweise ist die im Ultraschallsender und/oder -empfänger enthaltene Spule in Art einer Rechteckspule ausgeführt. Unter Rechteck ist hierbei eine zweidimensionale, rechteckige Geometrieform mit ungleich langen Seitenkanten zu verstehen, so dass die Rechteckspule über jeweils zwei gegenüberliegende längere sowie kürzere Spulenseiten verfügt. Weiterhin ist die Spule derart angeordnet, dass wenigstens eine längere Spulenseite der Rechteckspule zumindest teilweise von wenigstens einem Permanentmagneten überdeckt ist. Wird die Rechteckspule, die vorzugsweise aus einer Vielzahl von Wicklungen eines elektrischen Leiters besteht, mit einem elektrischen Frequenzgenerator verbunden und mit Wechselfrequenzspannungen mit wenigsten 20 kHz versorgt, so werden innerhalb des Prüfkörpers Wirbelströme induziert, die in Gegenwart des statischen Magnetfeldes zur Ausbildung einer Lorentz-Kraft führen, die letztlich das Atom-Gitter des vorzugsweise aus ferromagnetischen Material bestehenden Prüfkörpers periodisch zu deformieren vermag, wodurch eine direkte Anregung von Ultraschallwellen innerhalb des Prüfkörpers möglich wird. Durch die gewählte Ausgestaltung der EMUS-Wandler, längs deren längere Spulenseiten Permanentmagnete angeordnet sind, erfolgt die Gitterdeformation aufgrund der vorherrschenden Lorentz-Kräfte derart, dass sich Ultraschallwellen in Form von horizontal polarisierten Transversal-Wellen (SH-Wellen) parallel zur Längsrichtung der längeren Spulenseiten innerhalb des Prüfkörpers ausbreiten.

In einer bevorzugten Ausführungsform ist zwischen der Spule und dem wenigstens einen Permanentmagneten wenigstens eine Zwischenschicht vorgesehen. Diese Zwischenschicht besteht aus elektrisch leitfähigem, nicht ferromagnetischem Material. Besonders eignet sich hierfür kupferhaltiges Material bzw. Kupfer. Die Zwischenschicht zwischen der Spule und dem wenigstens einen Permanentmagneten stellt einen sogenannten elektrischen Schirm dar, der die Anregung von Wirbelströmen verhindert, die von der Spule in den Permanentmagneten induziert und die somit auch im Magneten die Anregung von Ultraschallwellen bewirken würde. Durch Vorsehen der Zwischenschicht werden nicht nur das S/N-Verhältnis nachteilhaft beeinflussende Störsignale vermieden, vielmehr trägt die Zwischenschicht auch zur Vermeidung von energiereichen Verlusten bei.

In einer besonderen Ausführungsform sind die elektrischen Schirme aus zwei Platten oder Plattensätzen vorzugsweise aus Kupfer ausgeführt, die unter dem wenigstens einen Permanentmagneten auf die HF-Spule ohne elektrischen Kontakt aufgelegt bzw. mittels einer Haftschicht mit dieser verfügt sind.

In einer weiteren, besonders geeigneten Ausführungsform ist auf der der Spule abgewandten Seite des wenigstens einen Permanentmagneten wenigstens ein Abdeckelement vorgesehen, das den wenigstens einen Permanentmagneten zumindest teilweise überdeckt. Das Abdeckelement ist vorzugsweise aus einem ferromagnetischen Material gefertigt. Besonders gut eignet sich hierfür ein ferromagnetischer Stahl. In einer weiteren Ausführungsform besteht das Abdeckelement aus zwei, aus ferromagnetischem Stahl gefertigten Platten. Derartige Abdeckelemente werden als sogenannte Rückschlüsse bezeichnet und sind mit den Permanentmagneten derart verfügt, dass sie die Magnetfelder der Magneten, die auf der der Spule abgewandten Seite des Permanentmagneten entstehen, regelrecht einschließen.

Die Rückschlüsse konzentrieren die Magnetfelder, verhindern ihre Streuung und sorgen dafür, dass tangential zur Prüfkörperoberfläche orientierte Magnetfelder lediglich im Prüfkörper ausgebildet sind. Der tangentiale Anteil des Magnetfeldes im Prüfkörper und die Fließrichtung des Stroms in der Spule weisen hierbei die gleiche Richtung auf. Diese Maßnahme verhindert die Anregung anderer Ultraschall-Moden im Prüfkörper.

Ohne ein derartiges Abdeckelement würden sich auch auf der dem Prüfkörper abgewandten Seite der Spule Magnetfelder zwischen den Permanentmagneten ausbilden. Die sich in einem derartigen Falle außerhalb des Prüfkörpers tangential zur Prüfkörperoberfläche ausbildenden Magnetfeldlinien, würden senkrecht zur Stromrichtung in der Spule verlaufen, so dass ungewollte Störsignale angeregt würden. Durch den Einsatz der Rückschlüsse werden diese Störanteile des Ultraschallsignals wesentlich geschwächt.

Weiterhin ist bei der erfindungsgemäßen Vorrichtung längs wenigstens einer der längeren Spulenseiten der Rechteckspule vorzugsweise eine Vielzahl von Permanentmagneten derart angeordnet, dass die magnetische Polung der der Rechteckspule zugewandten Seite zweier unmittelbar benachbart angeordneter Permanentmagnete unterschiedlich ist. Die Permanentmagnete erzeugen jeweils entgegengesetzt orientierte Magnetfelder, deren Magnetfeldlinien in Normalenrichtung zur Oberfläche des Prüfobjektes verlaufen, d.h. die Magnetfeldlinien verlaufen weitgehend senkrecht zur Oberfläche des Prüfkörpers.

In einer typischen Ausführungsform weist der wenigstens eine Permanentmagnet eine senkrecht zu einer von der Rechteckspule aufgespannten Ebene orientierte Höhe h von 6 bis 40 mm, vorzugsweise 24 mm auf.

Eine besondere Ausgestaltung der erfindungsgemäßen Vorrichtung sieht vor, dass der wenigstens eine Permanentmagnet wenigstens zwei gegenüberliegende geradlinige Seitenkanten aufweist und derart zur Rechteckspule angeordnet ist, dass die geradlinigen Seitenkanten senkrecht zur längeren Seite der Rechteckspule orientiert sind. Darüber hinaus sind wenigstens zwei benachbarte Permanentmagnete derart angeordnet, dass jene geradlinige Seitenkanten der benachbarten Permanentmagnete, zwischen denen jeweils nur ein Permanentmagnet vorhanden ist, einen Abstand a zueinander aufweisen. Vorzugsweise ist der Abstand a zwischen jeweils benachbarten Permanentmagneten identisch.

Eine weitere besonders geeignete Ausführungsform der erfindungsgemäßen Vorrichtung sieht vor, dass der wenigstens eine elektromagnetische Ultraschallsender mit einem elektrischen Spannungsgenerator verbunden ist. Der elektrische Spannungsgenerator erzeugt eine hochfrequente Wechselspannung, mit der die Rechtecksspule des Ultraschallsenders typischerweise mit wenigstens 20 kHz Wechselfrequenz beaufschlagt wird. Hierdurch wird ein elektromagnetisches Feld angeregt, das in einem zu prüfenden, leitfähigen Werkstoff Wirbelströme induziert.

Zusätzlich stellt jeder Permanentmagnet jeweils eine Quelle eines statischen Magnetfeldes, das sich im Prüfkörper ausbildet, dar. Die induzierten Wirbelströme wirken mit den Magnetfeldern der Permanentmagnete zusammen und bilden so die lokalen Quellen der horizontal polarisierten Transversal-Wellen (SH₀₋Wellen). Diese horizontal polarisierten Transversal-Wellen breiten sich in zwei Gegenrichtungen parallel zu den längeren Seiten der Spule aus.

In einer ganz besonderen Ausführungsform ist mit dem elektrischen Spannungsgenerator ein Spannungsverlauf, dessen Wellenlänge λ = 2 x a ist, erzeugbar. Auf diese Weise wird sichergestellt, dass der Abstand zwischen den Permanentmagneten einer Wellenlänge des Ultraschalls entspricht und so die Phasen der verschiedenen lokalen Ultraschallquellen zusammentreffen. Durch die Addition der sich von den verschiedenen Ultraschallquellen ausbreitenden Ultraschallwellen vergrößert sich die Schalldruckamplitude der Summenwelle proportional zur Anzahl der Permanentagnete.

Eine weitere besondere Ausführungsform der erfindungsgemäßen Vorrichtung sieht vor, dass der Ultraschallsender wenigstens eine Spule und wenigstens einen Permanentmagneten aufweist, mit deen eine Magnetfeldstärke von mindestens 0,5 Tesla zur Anregung von Ultraschallwellen im Prüfkörper erzeugbar ist. Der Ultraschallwandler wird hierbei derart von dem elektrischen Spannungsgenerator mit einer elektrischen Wechselspannung versorgt, dass Wirbelströme im Prüfkörper erzeugbar sind, die gemeinsam mit dem von dem wenigstens einen Permanentmagneten verursachten statischen Magnetfeld die Ausbildung von Ultraschallwellen verursachen.

Vorzugsweise weisen die Ultraschallempfänger und die Ultraschallsender den gleichen Aufbau auf. So regen die von Materialdiskontinuitäten reflektierten Echosignale in der Spule der Ultraschallempfänger elektrische Impulse an, die an eine Signalverarbeitungseinheit übertragbar sind.

In einer weiteren speziellen Ausführungsform der erfindungsgemäßen Vorrichtung ist eine Signalverarbeitungseinheit vorgesehen, mit der die mit dem Ultraschallempfänger detektierten Ultraschallwellen derart auswertbar sind, dass ein rauscharmes Ultraschallwellensignal durch Signalfilterung, Signalmittelung und/oder Signalkorrelation erzeugbar ist. Hierzu werden die von den Materialdiskontinuitäten reflektierten Echosignale in dem Ultraschallempfänger in ein elektrisches Sigal umgewandlet, das vorzugsweise von einem Analog-Digital-Umwandler digitalisiert und in einer weiteren speziellen Ausführungsform durch eine Mittelungseinheit gemittelt wird.

Vorzugsweise werden die gemittelten Signale durch Verzögerungsleitungen zum Addierer geleitet. Die Verzögerungsleitungen gewährleisten hierbei die optimale Phasenbelegung der vorzugsweise von unterschiedlichen Ultraschallempfängern übertragenen Signale bei der Addition. Durch eine phasengesteuerte Addition steigt die Amplitude des zu ermittelnden Fehlersignals, das aus der Summe der Einzelsignale gebildet wird, so dass ein sehr deutliches Fehlersignal mit einem wesentlich verbesserten Signal-Rausch-Abstand erzeugbar ist.

Weiterhin werden mit Hilfe einer optimalen Phasenbelegung innerhalb der Signalverarbeitungseinheit die akustischen Störsignale, die aufgrund einer Wellenumwandlung am Rohrrand entstehen, teilweise unterdrückt. Die Wellenumwandlung ist darauf zurückzuführen, dass transversale Ultraschallwellen der Nebenkeule am Rohrrand in Longitudinal-Wellen umgewandelt werden. Longitudinal-Wellen weisen allerdings im Vergleich zu Transversal-Wellen eine höhere Ausbreitungsgeschwindigkeit auf und erreichen somit den Ultraschallempfänger entsprechend schneller. Dieses "Rohrrand"-Signal würde daher zu einer Fehlinterpretation der Materialeigenschaften des Prüfkörpers führen.

Eine spezielle Ausführungsform der Erfindung sieht vor, die erfindungsgemäße Vorrichtung zur Detektion von Materialdiskontinuitäten derart anzuordnen, dass in Umfangsrichtung oder in Längsrichtung eines rohrförmigen Prüfkörpers wenigstens ein Ultraschallsender sowie zu dem Ultraschallsender beidseitig symmetrisch jeweils wenigstens ein Ultraschallwellenempfänger vorgesehen sind.

Weiterhin wird ein Verfahren beschrieben, mit dem die der Erfindung zugrundeliegende Aufgabe gelöst wird.

Erfindungsgemäß ist ein Verfahren zur Detektion von Materialdiskontinuitäten in einem Prüfkörper vorgesehen, insbesondere einer Rohrleitung, bei dem in dem Prüfkörper ein statisches magnetisches Feld erzeugt wird und gleichzeitig mit zumindest einem elektromagnetischen, wenigstens eine Spule und wenigstens einen Permanentmagneten aufweisenden Ultraschallsender Ultraschallwellen im Prüfkörper angeregt werden, sowie mit wenigstens einem zumindest eine Spule und zumindest einen Permanentmagneten aufweisenden Ultraschallempfänger, die innerhalb des Prüfkörpers reflektierten Ultraschallwellen detektiert werden, derart vorgesehen, dass der wenigstens eine Ultraschallsender sowie -empfänger derart angeordnet wird, dass das statische magnetische Feld ausschließlich durch die Permanentmagnete des Ultraschallsenders sowie -empfängers erzeugt wird.

Vorzugsweise wird hierzu zwischen einer Oberfläche des Prüfkörpers und dem wenigstens einen Ultraschallsender ein senkrechter Abstand eingestellt, der wesentlich kleiner als der Abstand a ist, der zwischen den geradlinigen Seitenkanten der benachbarten Permanentmagnete, zwischen denen jeweils nur ein Permanentmagnet vorhanden ist, gebildet wird. Der wenigstens eine Ultraschallempfänger generiert ein elektrisches Signal, das vorzugsweise digitalisiert wird. Diese Digitalisierung der elektrischen Impulse wird durch einen Analog-Digital-Umwandler realisiert.

In einer weiteren besonderen Ausführungsform des erfindungsgemäßen Verfahrens wird das elektrische Signal gemittelt, durch wenigstens eine Verzögerungsleitung geleitet und addiert. Aufgrund der stochastischen Natur des Rauschens, das ebenfalls mit dem wenigstens einen Ultraschallempfänger detektiert wird, ist es möglich, bekannte Mittelungsalgorithmen zur Rauschunterdrückung zu verwenden. Hierbei wird das Signal-Rausch-Verhältnis maximal proportional zur Wurzel aus der Anzahl der Mitteilungen verbessert. Vorzugsweise werden diese Algorithmen mittels bekannter Digitaltechnik in nahezu Echtzeit ausgeführt, so dass durch diese Mittellung keine Einschränkungen hinsichtlich der Prüfgeschwindigkeit verursacht werden.

In einer weiteren Ausführungsform des erfindungsgemäßen Verfahrens werden die innerhalb des Prüfkörpers reflektierten Ultraschallwellen mit zwei, vier oder einer geraden ganzzahlig vielfachen Anzahl von zwei Ultraschallempfängern detektiert. Vorzugsweise werden für das erfindungsgemäße Verfahren zur Detektion von Materialdiskontinuitäten in einem Prüfkörper ein Ultraschallsender sowie vier Ultraschallempfänger eingesetzt.

Vorzugsweise werden die mit den Ultraschallempfängern jeweils detektierten Ultraschallwellen unabhängig voneinander in getrennte elektrische Signale umgesetzt und unabhängig voneinander digitalisiert, gemittelt und anschließend bezüglich ihrer Phase aufeinander abgestimmt. Vorzugsweise wird die Abstimmung der unterschiedlichen Phasen aufeinander mit Hilfe von Verzögerungsleitungen realisiert. Hierbei werden die optimalen Phasenverschiebungen automatisch durch Variation erzeugt, wobei die Effektivität des Verfahrens anhand der Vermessung von Testfehlern überprüfbar ist. Mit Hilfe einer solchen optimierten Phasenverschiebung wird zumindest teilweise auch das Reflexionsverhalten an Materialfehlern innerhalb des Prüfkörpers korrigiert, deren Lage am Rande oder außerhalb des vom Ultraschallkegel erfassten Messbereiches liegen.

Bei einer speziellen Ausführungsform des erfindungsgemäßen Verfahrens wird die Phasenabstimmung unter den getrennten Signalen derart vorgenommen, dass Signalanteile jedes einzelnen Signals, die durch ein gemeinsames Reflexionssignal hervorgerufen worden sind, durch Addition zu einem Summensignalanteil zusammengefasst werden. Die Visualisierung des Summensignals erfolgt vorzugsweise mittels einer Darstellungseinheit, die das Summensignal bildlich sichtbar macht.

Mit Hilfe der erfindungsgemäßen Vorrichtung sowie des erfindungsgemäßen Verfahrens werden sogar Prüfungen von kunststoff-beschichteten Rohren oder Rohren in Beton oder generell von Rohrabschnitten, die aus verschiedenen Gründen nicht zugänglich sind, möglich. Die Überprüfung der entsprechenden Rohre auf Materialdiskontinuitäten erfolgt hierbei über einen weiten Prüfungsbereich. So wird mit Hilfe der erfindungsgemäßen Vorrichtung bzw. des erfindungsgemäßen Verfahrens die Detektion von Fehlern in einem Abstand bis zu 4 m von dem Ultraschallsender bzw. in besonderen Fällen sogar in einem Abstand von 10 m ermöglicht.

Die erfindungsgemäße Vorrichtung zur Detektion von Materialdiskontinuitäten in einem Prüfkörper soll im weiteren unter Bezugnahme auf die im folgenden beschriebenen Figuren näher erläutert werden.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnung exemplarisch beschrieben. Es zeigen:
- Fig. 1: Schematische Darstellung einer Ultraschallprüfanordnung zur Rohrprüfung mit elektromagnetischem Ultraschallwandler,
- Fig. 2: Aufbau eines EMUS-Wandlers,
- Fig. 3: Anordnung eines EMUS-Wandlers an einem Rohr.

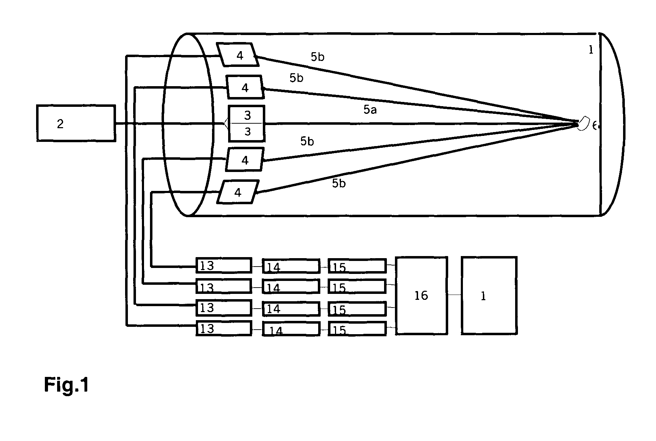

In Fig. 1 ist eine Ultraschallprüfanordnung dargestellt, die über eine elektromagnetische Ultraschallwandler-Einheit (EMUS) verfügt. Die Ultraschallprüfanordnung, die über einen Ultraschallsender 3 und vier Ultraschallempfänger 4 verfügt und deren Ultraschallempfänger 4 beidseitig symmetrisch zum Ultraschallsender 3 angeordnet sind, wird zum Prüfen von einem als Rohr ausgebildeten Prüfkörper 1 verwendet.

Ein elektrischer Spannungsgenerator 2 versorgt den elektromagnetischen Ultraschallsender 3 mit Wechselspannung. Der elektromagnetische Ultraschallsender 3 regt Ultraschallwellen mit horizontaler Polarisation, insbesondere Scherhorizontal-Wellen (SH-Wellen) 5a, an. Die Ultraschallwellen breiten sich in axialer Richtung aus und werden an der Materialdiskontinuität 6 reflektiert. Die reflektierten Ultraschallwellen 5b werden von den elektromagnetischen Ultraschallempfängern 4 detektiert. Die von dem Ultraschallsender 3 erzeugten und von den vier Ultraschallempfängern 4 gemessenem Messsignale, die von dem Reflexionsereignis an der Materialdiskontinuität 6 herrühren, werden in vier unabhängige elektrische Signale umgesetzt. Die Signale der einzelnen Empfangskanäle werden anschließend unabhängig voneinander verarbeitet.
Die elektrischen Signale pro Ultraschallwellenempfänger 4 werden jeweils von einem Analog-Digital-Umwandler 13 digitalisiert und gelangen durch die Verzögerungsleitungen 15 zum Addierer 16. Die Verzögerungsleitungen 15 gewährleisten hierbei eine optimale Phasenbelegung der Signale bei der Addition. Durch die phasengesteuerte Addition steigt die Amplitude der Messsignale, wodurch sich der Signal-Rausch-Abstand deutlich verbessert. Die Ausgabe der detektierten Fehlersignale erfolgt mit Hilfe einer Darstellungseinheit 17.

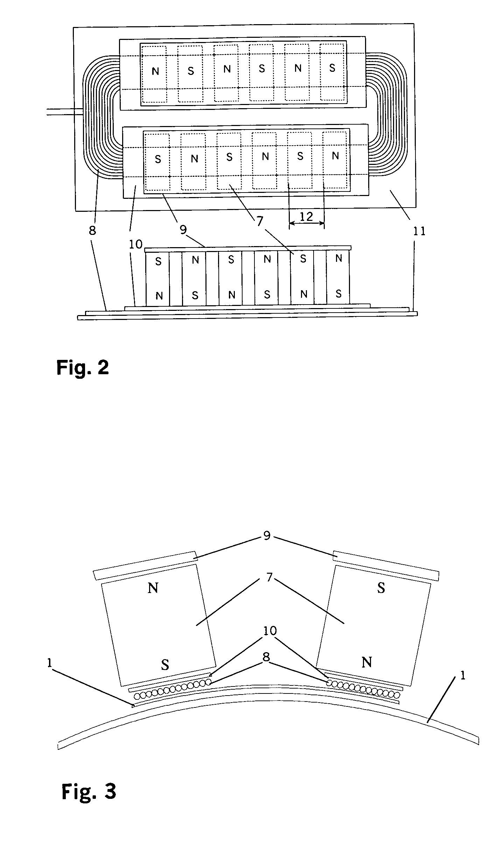

In Fig. 2 ist ein schematischer Aufbau eines EMUS-Wandlers dargestellt, wie er als Ultraschallsender- oder -empfänger einsetzbar ist. Der EMUS-Wandler verfügt über Permanentmagnete 7, eine hochfrequente Spule 8, zwei Rückschlüsse 9, zwei elektrische Schirme 10 sowie einen Protektor 11.

Die Permanentmagnete 7 sind auf den verlängerten Seiten der HF-Spule 8 derart angeordnet, dass sich die Polung der Permanentmagnete auf der der Spule zugewandten Seite abwechselt. Der Abstand (a) bzw. 12 zwischen den Permanentmagneten entspricht der Halbwellenlänge der angeregten SH₀-Welle.
Die Permanentmagnete regen somit entgegengesetzt gerichtete Magnetfelder an, deren Magnetfeldlinien in Normalenrichtung zur Oberfläche des Rohres verlaufen.

Die hochfrequente Spule 8 ist als Rechteckspule mit zwei längeren sowie zwei kürzeren Seiten ausgebildet. Die Spule besteht aus einem Kupferdraht, deren Windungen eng zueinander gelegt sind und an der Oberfläche des Rohres 1 anliegen.

Fig. 3 zeigt die Anordnung der elektromagnetischen Ultraschallsenders (EMUS) 3 am Rohr 1, mit dem Ultraschallwellen innerhalb des Rohres 1 anregbar sind.
Diese Querschnittsansicht zeigt sowohl die Spule 8 als auch zwei gegenüberliegende Permanentmagneten 7 in ihrer Schnittdarstellung.

Die Rückschlüsse 9 stellen zwei Platten aus ferromagnetischem Stahl dar. Diese werden auf die Permanentmagnete 7 aufgelegt und schließen die Magnetfelder der Magneten 7 regelrecht ein. Die Rückschlüsse 9 konzentrieren die Magnetfelder, verringern ihre Streuung und formen tangentiale Magnetfelder zwischen den Magneten 7 ausschließlich auf der Seite der Spule, die dem Prüfkörper zugewandt ist, im Rohr 1 aus. Die Magnetfeldlinien dieses tangential zur Oberfläche des Rohres 1 angeordneten Magnetfeldes verlaufen parallel zur Stromrichtung innerhalb der Spule 8.

Die Abdeckelemente 10 stellen elektrische Schirme dar und sind als zwei Platten aus Kupfer ausgeführt, die unterhalb der Permanentmagnete 7 auf die HF-Spule 8 ohne elektrisch leitfähigen Kontakt aufgelegt sind. Die elektrischen Schirme 10 verringern die Anregung von Wirbelströmen, die von der HF-Spule 8 in den Magneten 7 verursacht werden. Derartige Wirbelströme würden zusammen mit dem sich ausbildenden statischen Magnetfeld der Permanentmagneten 7 ebenfalls zur Bildung von Ultraschallwellen innerhalb de Permanentmagnete 7 führen. Der Einsatz der elektrischen Schirme 10 unterdrückt ebendiese Ultraschallwellenausbildung.

Ein Protektor 11 dient für den Schutz der HF-Spule 8 vor Beschädigungen beim Verschieben des elektromagnetischen Ultraschallsenders 3 längs der Oberfläche des Rohres 1. Der Protektor 11 ist als dünne Schicht aus austenitischem Stahl ausgeführt. In jedem Fall ist der Protektor 11 aus einem robusten, nicht ferromagnetischen Werkstoff gefertigt. Hierdurch werden die Betriebscharakteristiken bei der Prüfung von Rohren mit bspw. korrodierter Oberfläche, verbessert. Außerdem verringert sich der Verschleiß an der Prüfkopfoberfläche eines elektromagnetischen Ultraschallsenders bei der Abtastung, wodurch auch die Lebensdauer des Ultraschallsenders verlängert wird.

### Bezugszeichenliste

- 1: Rohr
- 2: Spannungsgenerator
- 3: Ultraschallsender
- 4: Ultraschallempfänger
- 5a: Vom Ultraschallsender ausgesandte SH-Wellen
- 5b: Von einer Materialdiskontinuität reflektierte Ultraschallwellen
- 6: Materialdiskontinuität
- 7: Permanentmagnet
- 8: Spule
- 9: Abdeckelement / Rückschluss
- 10: Zwischenschicht / elektrischer Schirm
- 11: Protektor
- 12: Abstand (a)
- 13: Analog-Digital-Wandler
- 14: Mittelungseinheit
- 15: Verzögerungsleitung
- 16: Addierer
- 17: Darstellungseinheit

## Patentansprüche

1. Vorrichtung zur Detektion von Materialdiskontinuitäten in einem Prüfkörper, insbesondere einer Rohrleitung, mit zumindest einem elektromagnetischen Ultraschallsender, der wenigstens eine Spule und wenigstens einen Permanentmagneten vorsieht und zur Anregung von Ultraschallwellen im Prüfkörper ausgebildet ist, wenigstens einem Ultraschallempfänger, der wenigstens eine Spule und wenigstens einen Permanentmagneten vorsieht und der zur Detektion von innerhalb des Prüfkörpers reflektierten Ultraschallwellen ausgebildet ist sowie einer Magnetisierungseinheit, durch die im Prüfkörper ein statisches magnetisches Feld erzeugbar ist,
**dadurch gekennzeichnet, dass** der wenigstens eine Permanentmagnet des Ultraschallsenders sowie -empfängers die Magnetisierungseinheit darstellt.

2. Vorrichtung nach Anspruch 1,
**dadurch gekennzeichnet, dass** die Spule des wenigstens einen Ultraschallsenders und/oder -empfängers in Art einer Rechteckspule mit zwei gegenüberliegenden längeren sowie kürzeren Spulenseiten derart ausgebildet ist, dass wenigstens eine längere Spulenseite der Rechteckspule zumindest teilweise von dem wenigstens einen Permanentmagneten überdeckt ist.

3. Vorrichtung nach Anspruch 1 oder 2,
**dadurch gekennzeichnet, dass** zwischen der Spule und dem wenigstens einen Permanentmagneten wenigstens eine Zwischenschicht vorgesehen ist.

4. Vorrichtung nach Anspruch 3,
**dadurch gekennzeichnet, dass** die wenigstens eine Zwischenschicht aus elektrisch leitfähigem, nicht ferromagnetischem Material, vorzugsweise aus kupferhaltigem Material oder Kupfer besteht.

5. Vorrichtung nach einem der Ansprüche 1 bis 4,
**dadurch gekennzeichnet, dass** auf der der Spule abgewandten Seite des wenigstens einen Permanentmagneten wenigstens ein Abdeckelement vorgesehen ist, das den wenigstens einen Permanentmagneten zumindest teilweise überdeckt.

6. Vorrichtung nach Anspruch 5,
**dadurch gekennzeichnet, dass** das Abdeckelement aus einem ferromagnetischen Material, vorzugsweise Stahl besteht.

7. Vorrichtung nach einem der Ansprüche 2 bis 6,
**dadurch gekennzeichnet, dass** längs wenigstens einer längeren Spulenseite der Rechteckspule eine Vielzahl von Permanentmagneten derart angeordnet ist, dass eine magnetische Polung einer der Rechteckspule zugewandten Seite der Permanentmagneten zweier längs der Rechteckspule angeordneter Permanentmagnete unterschiedlich ist.

8. Vorrichtung nach einem der Ansprüche 2 bis 7,
**dadurch gekennzeichnet, dass** der wenigstens eine Permanentmagnet eine senkrecht zur von der Rechteckspule aufgespannten Ebene orientierte Höhe h von 6 bis 40 mm, vorzugsweise 24 mm aufweist.

9. Vorrichtung nach einem der Ansprüche 2 bis 8,
**dadurch gekennzeichnet, dass** , dass der wenigstens eine Permanentmagnet wenigstens zwei gegenüberliegende geradlinige Seitenkanten aufweist und derart zur Rechtecksspule angeordnet ist, dass die geradlinigen Seitenkanten senkrecht zur längeren Seite der Rechtecksspule orientiert sind ,
dass wenigstens zwei benachbarte Permanentmagnete derart angeordnet sind, dass jene geradlinige Seitenkanten der benachbarten Permanentmagnete, zwischen denen jeweils nur ein Permanentmagnet vorhanden ist, einen Abstand a aufweisen, und
dass der Abstand a zwischen jeweils benachbarten Permanentmagneten identisch ist.

10. Vorrichtung nach einem der Ansprüche 1 bis 9,
**dadurch gekennzeichnet, dass** der wenigstens eine elektromagnetische Ultraschallsender mit einem elektrischen Spannungsgenerator verbunden ist.

11. Vorrichtung nach Anspruch 10,
**dadurch gekennzeichnet, dass** mit dem elektrischen Spannungsgenerator ein Spannungsverlauf, dessen Wellenlänge λ = 2•(a) beträgt, erzeugbar ist.

12. Vorrichtung nach Anspruch 10 oder 11,
**dadurch gekennzeichnet, dass** der Ultraschallsender wenigstens eine Spule und wenigstens einen Permanentmagneten vorsieht , mit denen eine Magnetfeldstärke von mindestens 0,5 Tesla zur Anregung von Ultraschallwellen im Prüfkörper erzeugbar ist, und der Ultraschallwandler von dem elektrischen Spannungsgenerator derart mit einer elektrischen Wechselspannung versorgbar ist, dass Wirbelströme im Prüfkörper erzeugbar sind, so dass Ultraschallwellen ausgebildet werden.

13. Vorrichtung nach einem der Ansprüche 1 bis 12,
**dadurch gekennzeichnet, dass** mittels einer Signalverarbeitungseinheit die mit dem Ultraschallempfänger detektierten Ultraschallwellen derart auswertbar sind, dass ein rauscharmes Ultraschallwellensignal durch Signalfilterung, Signalmittelung und/oder Signalkorrelation erzeugbar ist.

14. Messanordnung unter Verwendung der Vorrichtung nach einem der
Ansprüche 1 bis 13,
**dadurch gekennzeichnet, dass** in Umfangsrichtung oder in Längsrichtung eines rohrförmigen Prüfkörpers wenigstens ein Ultraschallsender sowie zu dem Ultraschallsender beidseitig symmetrisch jeweils wenigstens ein Ultraschallwellenempfänger vorgesehen sind.

15. Verfahren zur Detektion von Materialdiskontinuitäten in einem Prüfkörper, insbesondere einer Rohrleitung, bei dem in dem Prüfkörper ein statisches magnetisches Feld erzeugt wird und gleichzeitig
- mit zumindest einem elektromagnetischen wenigstens eine Spule und wenigstens einen Permanentmagneten aufweisenden Ultraschallsender Ultraschallwellen im Prüfkörper angeregt werden sowie
- mit wenigstens einem zumindest eine Spule und zumindest einen Permanentmagneten aufweisenden Ultraschallempfänger die innerhalb des Prüfkörpers reflektierten Ultraschallwellen detektiert werden,
**dadurch gekennzeichnet, dass** der wenigstens eine Ultraschallsender sowie -empfänger derart angeordnet wird, dass das statische magnetische Feld ausschließlich durch die Permanentmagnete des Ultraschallsenders sowie - empfängers erzeugt wird.

16. Verfahren nach Anspruch 15,
**dadurch gekennzeichnet, dass** zwischen einer Oberfläche des Prüfkörpers und dem wenigstens einen Ultraschallsender ein senkrechter Abstand eingestellt wird, der wesentlich kleiner als der Abstand (a) nach Anspruch 9 ist.

17. Verfahren nach Anspruch 15 oder 16,
**dadurch gekennzeichnet, dass** der Ultraschallempfänger ein elektrisches Signal generiert, das digitalisiert wird.

18. Verfahren nach Anspruch 17,
**dadurch gekennzeichnet, dass** das elektrische Signal gemittelt, durch wenigstens eine Verzögerungsleitung geleitet und addiert wird.

19. Verfahren nach einem der Ansprüche 15 bis 18,
**dadurch gekennzeichnet, dass** die innerhalb des Prüfkörpers reflektierten Ultraschallwellen mit zwei, vier oder eine andere ganzzahlig vielfache Anzahl von zwei Ultraschallempfängern detektiert werden.

20. Verfahren nach Anspruch 19,
**dadurch gekennzeichnet, dass** die mit den Ultraschallempfängern detektierten Ultraschallwellen unabhängig voneinander in getrennte elektrische Signale umgesetzt und unabhängig von einander digitalisiert, gemittelt und bzgl. ihrer Phase, vorzugsweise mittels wenigstens einer Verzögerungsleitung, aufeinander abgestimmt werden.

21. Verfahren nach Anspruch 20,
**dadurch gekennzeichnet, dass** die Phasenabstimmung unter den getrennten Signalen derart vorgenommen wird, dass Signalanteile, des jeweiligen einzelnen Signals, die durch ein gemeinsames Reflexionssignal hervorgerufen worden sind, durch Addition zu einem Summensignalanteil zusammengefasst werden.
